# EUROPEAN PATENT SPECIFICATION

(11) **EP 0 336 327 B1**
(45) Date of publication and mention of the grant of the patent: **28.12.1994**
(21) Application number: 89105770.5
(22) Date of filing: 01.04.1989
(51) Int. Cl.: D06H 7/00, B65H 35/06

(54) **A machine for cutting sheet and like in a predetermined length and piling the cut sheets**
Vorrichtung zum Schneiden von Flachmaterial und dergleichen in einer vorbestimmten Länge und Stapeln des geschnittenen Flachmaterials
Appareil pour découper des feuilles et similaires de longueur prédéterminée et pour entasser des feuilles coupées

(30) Priority: 05.04.1988 JP 46675/88; 11.11.1988 JP 147756/88
(43) Date of publication of application: 11.10.1989
(73) Proprietor: Tachibana, Masuo, Nara-shi Nara (JP)
(72) Inventor: Tachibana, Masuo, Nara-shi Nara (JP)
(74) Representative: Türk, Gille, Hrabal, Leifert

(56) References cited:
- EP-A- 0 136 273
- DE-A- 3 118 500
- DE-A- 3 712 853
- DE-B- 2 201 396
- FR-A- 2 531 941
- US-A- 4 629 176

## Description

This invention relates to a machine for cutting sheet material and the like in predetermined lengths and for piling the cut sheets, which cuts and piles sheet material such as mats, textiles, non-woven textiles, paper, plastic sheets, leather and the like.

A known machine of this kind (FR-A1-2 531 941) cuts the sheet material in regular sizes by using a cutter, the sheet material being pushed out or drawn out by a pair of vertically juxtaposed rollers.

According to these conventional methods, the condition of the sheet material is not stable and it cannot be cut accurately by the cutter since the end of the sheet material which is pushed out or drawn out by the rollers is not grasped certainly. Furthermore, there are some problems to cause a difference in the cut size or not to be able to pile the cut material regularly according to conditions such as thickness, elasticity, direction of texture of the material and the like.

The difference in the cut size causes waste of the material such as producing inferior goods. It also takes a waste of time when transferring and packaging the cut goods since they cannot be piled regularly.

The object of the invention is to provide a machine which avoids said problems and cuts sheet material quite accurately in measurement and piles the cut sheets regularly on a placing base.

To accomplish the object, the apparatus according to the present invention comprises a pair of grasping means juxtaposed vertically over and under the sheet material, said grasping means having cut portions laterally at certain given intervals, releasing the sheet material after grasping and moving it to a predetermined-length position, and then returning to an initial position and grasping the sheet material again, at least one comb-like fixing means which fits in said cut portions, said fixing means grasping the front end of the sheet material just before said grasping means releasing it, a cutter which cuts the sheet material when said grasping means return and grasp the sheet again, and a base on which the cut sheets are piled, wherein said grasping means, said fixing means, said cutter and said base move up and down relatively.

After the sheet material was grasped and moved to the predetermined length position by the two grasping means which have the cut portions in a lateral direction of the sheet material at certain given intervals and are juxtaposed vertically over and under the sheet, the sheet material is grasped by putting the fixing means in the cut portions of said grasping means, at the same time said grasping means are parted to release the sheet material, and then the grasping means are returned to an established initial position to grasp the sheet material again, and cutting is conducted and said base is brought down a little after the cut sheet was released. Thus accurate cutting in measurement can be done in a state that two portions of the sheet material are grasped certainly to be stable, and also cutting operation is conducted accurately and easily to be able to pile the cut sheets on the base in good manner.

Further, another object of the present invention is to prevent obstructing the accurate piling by bending of the sheet material at the time of moving the sheet material and by contacting the bending sheet material with the piled cut sheets.

To accomplish this object, in an embodiment of the invention, a cloth-form reciprocating mechanism which moves parallel to said sheet material under the surface thereof and returns corresponding to the return of said grasping means is provided.

The following is a description in detail based on embodiments shown in the drawings, wherein
Fig. 1 is a side view showing an embodiment of the present invention,
Fig. 2 a plan view thereof, and
Fig. 3 (a), (b) and (c) are side views showing another embodiment, respectively.

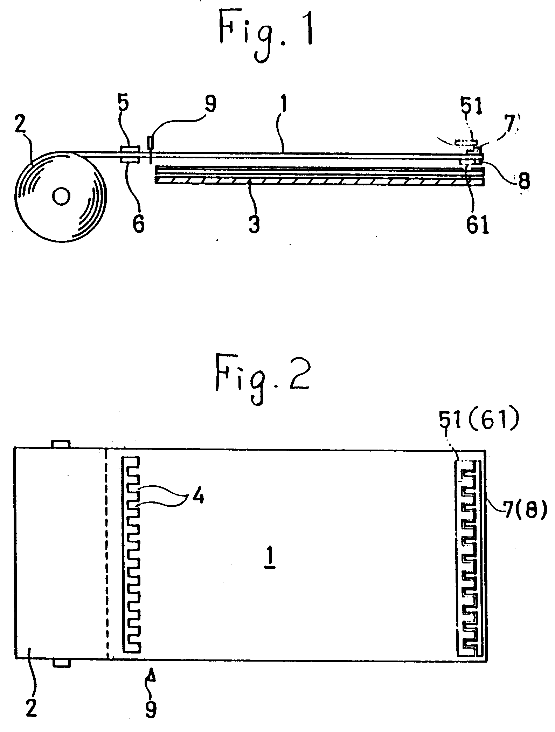

Sheet material 1 such as textile, non-woven textile, plastic sheet, paper product, mat and the like is drawn out from a winding roller 2. A base 3 on which cut sheets are piled is disposed under the sheet material. A couple of comb-like grasping means 5, 6 having cut portions 4 at certain given intervals are juxtaposed verticaly over and under said sheet material 1 in the lateral direction so that upper and lower cut portions 4 of said grasping means 5, 6 correspond vertically, respectively, at slightly outside than the left end of said base 3. In Fig. 1, the grasping means 5, 6 are shown in the state that they grasp the sheet material 1. From this state, said grasping means 5, 6 move to a predetermined position of right (front) end portion of the base 3 shown in two dotted chain lines 51, 61 grasping the sheet material 1. A limit switch and the like may be used to detect its predetermined position or a driving means and the like may be controlled by a micro-computer.

Comb-like fixing means 7, 8 which are able to be put in the cut portions of grasping means 51, 61 which positions are juxtaposed vertically over and under said sheet material in a predetermined position to grasp and fix the front end of the sheet material 1.

Then said grasping means 51, 61 are separated upward and downward to release the grasp of the sheet material 1 as shown in Fig. 1. In this state the grasping means 5, 6 return to the initial position shown in a full lines to grasp the sheet material again. And then cutting is done by a cutter 9 disposed over the sheet material 1 at the position between said grasping means 5, 6 and the front end of the base.

As the driving means for moving said grasping means 5, 6 and fixing means 7, 8, and for grasping and releasing, anything such as a motor, pneumatic mechanism and the like may be used. As a method of driving, connecting from side of the sheet material with a connecting means (not shown) and the like may be applied.

The cutting is conducted in a stable condition, accurately in size and easily because the left end portion of the sheet 1 is grasped by grasping means 5, 6 and the right end portion thereof is grasped by fixing means 7, 8 certainly.

When finishing said cutting, said fixing means 7, 8 part up and down and return to the original state. At this time said fixing means, of course, proceed forward slightly in a direction of moving in order to drop the cut sheet. Since the base 3 goes down a little corresponding to the thickness of the sheet material 1, the cut sheets are piled one by one on the base 3 in good order. And the grasping means 5, 6 move again in a state that they remain holding the sheet material when cutting, and the same operations mentioned above are repeated. Of course, instead of base 3 going down, the cutter 9, grasping means 5, 6 and fixing means 7, 8 may rise stepwise.

The intervals of the cut portions 4 of said comb-like grasping means 5, 6 are different according to the material of the sheet material 1, and the cutter 9 is disposed as closely to the grasping means at the initial position as possible. The fixing means comprises a vertical pair, but upper one alone may be applied. That is, the base 3 is utilized as a lower means to grasp. In this case, the fixing means presses the sheet material to the base 3, at the same time the grasping means release the sheet material and go back.

The cutting position should be designed according to the material and the structure of the cutter 9, but the position is preferably determined as closely to the front end of the grasping means as possible, normally about 1 cm.

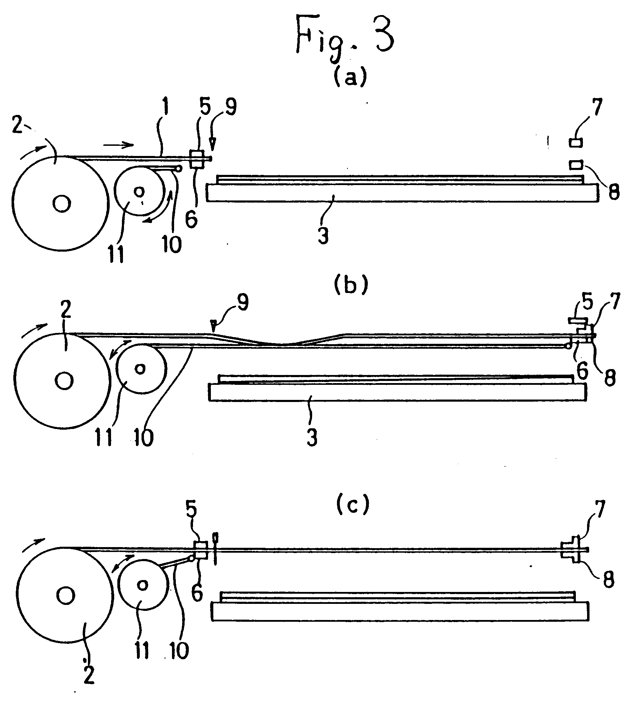

Fig. 3(a), (b) and (c) are views shown conditions of using a cloth-form body 10 for preventing bending of the sheet material 1 according to the invention. The cloth-form body 10 which moves parallel to the sheet material to be cut under the sheet material and conducts a reciprocating movement corresponding to the movement of the grasping means 5, 6.

The cloth-form body 10 is drawn out and wound back automatically to accomplish the object. The material of the cloth-form body 10 is not limited to a cloth, but any material such as plastics and the like may be applied if it is flexible or bendable. Any driving means may be applied for the cloth-form body, and said driving means may serve also for driving the grasping means 5, 6, and they may be connected and cooperated to move.

In the embodiment, the sheet material 1 and the bending preventive cloth-form body 10 are wound on a roller 2 and 11, respectively, but the present invention is not limited to this. The type and ability of an automatic control system for automatic elevation of the grasping means and the cutter do not limit the present invention at all.

The embodiments according to the present invention are mentioned above. It is possible to change the design, wherein the change does not depart from the gist of the invention. For example, it is possible to dispose the cutter under the sheet material if necessary while it is disposed over the sheet material in the above explained embodiments.

As clearly seen, the machine for cutting sheet material and the like in a predetermined length and piling the cut sheets according to the present invention is able to cut accurately in size in a stable state that the ends of the sheet material are grasped certainly, the cutting operation is easy, and the cut sheets are piled on the base well-regulatedly.

Furthermore, it is possible to prevent bad influences to the piled sheets by bending of the sheet material under operation.

## Claims

1. Machine for cutting sheet material (1) and the like in predetrmined lengths and for piling the cut sheets, comprising advancing means (5, 6) juxtaposed vertically over and under the sheet material (1) for contacting and for advancing it before cutting a predetermined length thereof, and comprising a cutter (9) for cutting the sheet material after a predetermined length thereof has been advanced beyond the cutter,
**characterized in that**
the advancing means comprise a pair of grasping means (5, 6) having cut portions (4) arranged laterally at certain given intervals, the grasping means grasp the sheet material (1) and move it to a predeterminded length position, release it and then return to its initial positin and grasp the sheet material (1) again, wherein at least one comb-like fixing means (7, 8) fitting into the cut portions (4) of the grasping means is provided for grasping the front end of the sheet material (1) just before the grasping means (5, 6) release it, the cutter (9) cutting the sheet material (1) after the grasping means (5, 6) returned to its initial position and grasped the sheet material (1) again, and wherein a base (3) is provided on which the cut sheets are piled, the grasping means (5, 6), the fixing means (7, 8), the cutter (9) and the base (3) being moveable up and down relatively to the sheet material (1).

2. Machine as defined in claim 1, characterized in that the fixing means comprises a vertically juxtaposed pair of comb-like fixing means (7, 8).

3. Machine as defined in claim 1, characterized in that the fixing means is a pressing plate (7) disposed over the sheet material (1).

4. Machine as defined in one of claims 1 to 3, characterized in that the grasping means (5, 6) the fixing means (7, 8) and the cutter (9) move up integrally stepwise after cutting.

5. Machine as defined in one of claims 1 to 4, characterized in that the base (3) moves down stepwise after cutting.

6. Machine as defined in one of claims 1 to 5, characterized in that a reciprocating means (11) of a cloth form body (10) is provided to move parallel to the sheet material (1) to be cut under the sheet material and returns together with the return movement of the grasping means (5, 6).

## Patentansprüche

1. Vorrichtung zum Schneiden von Flachmaterial (1) od.dgl. in einer vorbestimmten Länge und zum Stapeln des geschnittenen Flachmaterials, enthaltend Fördermittel (5, 6), welche vertikal nebeneinander über und unter dem Flachmaterial (1) angeordnet sind, um dieses zu ergreifen und nach vorne zu bewegen, bevor eine bestimmte Länge davon abgeschnitten wird, und enthaltend ein Schneidgerät (9), um das Flachmaterial abzuschneiden, nachdem eine bestimmte Länge davon über die Position des Schneidgerätes vorgeschoben wurde,
**dadurch gekennzeichnet**, **daß**
die Vorschubmittel ein Paar Greifermittel (5, 6) enthalten, die Ausschnitte (4) aufweisen, welche seitlich in vorbestimmten Intervallen angeordnet sind, wobei die Greifermittel das Flachmaterial (1) ergreifen und es in eine vorbestimmte Längenpostion schieben und es dort loslassen und dann in die Ausgangsposition zurückkehren, um das Flachmaterial (1) wider zu ergreifen, wobei mindestens ein in die Ausschnitte (4) der Greifermittel eingreifendes kammartiges Befestigungsmittel (7, 8) vorgesehen ist, um das vordere Ende des Flachmaterials (1) zu ergreifen, bevor die Greifermittel (5, 6) es loslassen, und das Schneidgerät (9) das Flachmaterial (1) abschneidet, nachdem die Greifermittel (5, 6) in die Ausgangsposition zurückgekehrt sind und das Flachmaterial (1) wieder ergriffen haben, und die eine Auflage (3) enthält, auf der das abgeschnittene Flachmaterial gestapelt wird, wobei die Greifermittel (5, 6), die Befestigungsmittel (7, 8) und das Schneidgerät (9) gegenüber dem Flachmaterial (1) angehoben und abgesenkt werden können.

2. Vorrichtung nach Anspruch 1,
**dadurch gekennzeichnet, daß**
die Befestigungsvorrichtung ein vertikal nebeneinander liegendes Paar kammartiger Befestigungsmittel (7, 8) aufweist.

3. Vorrichtung nach Anspruch 1,
**dadurch gekennzeichnet**, **daß**
das Befestigungsmittel eine Druckplatte (7) ist, welche über dem Flachmaterial (1) angeordnet ist.

4. Vorrichtung nach einem der Ansprüche 1 bis 3,
**dadurch gekennzeichnet**, **daß**
die Greifermittel (5, 6), die Befestigungsmittel (7, 8) und das Schneidgerät (9) nach dem Schneidvorgang schrittweise integral angehoben werden.

5. Vorrichtung nach einem der Ansprüche 1 bis 4,
**dadurch gekennzeichnet**, **daß**
sich die Auflage (3) nach dem Schneidvorgang schrittweise nach unten bewegt.

6. Vorrichtung nach einem der Ansprüche 1 bis 5,
**dadurch gekennzeichnet**, **daß**
ein Kolbenmittel (11) eines Tuchformkörpers (10) vorgesehen ist, das sich parallel zu dem zu schneidenden Flachmaterial (1) unter dem Flachmaterial bewegt und zusammen mit der Rückwärtsbewegung der Greifermittel (5, 6) in die Ausgangsposition zurückkehrt.

## Revendications

1. Machine destinée à découper une matière en feuille (1) ou analogue en longueurs prédéterminées et à empiler les feuilles découpées, comprenant des moyens d'avance (5, 6) juxtaposés verticalement au-dessus et au-dessous de la matière en feuille (1) pour entrer en contact avec elle et la faire avancer avant la coupe d'une longueur prédéterminée de cette matière, et comprenant une lame (9) destinée à couper la matière en feuille après qu'une longueur prédéterminée de cette matière a été avancée au-delà de la lame,
caractérisée en ce que
les moyens d'avance comprennent une paire de moyens de saisie (5, 6) ayant des encoches (4) disposées à certains intervalles donnés dans la direction transversale, lesdits moyens de saisie saisissent la matière en feuille (1) et l'amènent à une position correspondant à une longueur prédéterminée, la relâchent et reviennent ensuite à la position initiale puis saisissent de nouveau la matière en feuille (1) ; il est prévu au moins un moyen de fixation (7, 8) en forme de peigne qui s'emboîte dans les encoches (4) des moyens de saisie pour saisir l'extrémité avant de la matière en feuille (1) juste avant que les moyens de saisie (5, 6) ne la relâchent, la lame (9) coupant la matière en feuille (1) après que les moyens de saisie (5, 6) sont revenus à leur position initiale et ont de nouveau saisi la matière en feuille (1), et il est prévu une base (3) sur laquelle les feuilles découpées sont empilées, les moyens de saisie (5, 6), les moyens de fixation (7, 8), la lame (9) et la base (3) pouvant monter et descendre par rapport à la matière en feuille (1).

2. Machine selon la revendication 1, caractérisée en ce que les moyens de fixation comprennent une paire de moyens de fixation (7, 8) juxtaposés verticalement.

3. Machine selon la revendication 1, caractérisée en ce que les moyens de fixation sont une plaque presseuse (13) disposée au-dessus de la matière en feuille (1).

4. Machine selon une des revendications 1 à 3, caractérisée en ce que les moyens de saisie (5, 6), les moyens de fixation (7, 8) et la lame (9) montent comme un seul bloc pas à pas après le découpage.

5. Machine selon une des revendications 1 à 4, caractérisée en ce que la base (3) descend pas à pas après la coupe.

6. Machine selon une des revendications 1 à 5, caractérisée en ce qu'un moyen (11) de déplacement alternatif d'un organe (10) analogue à une toile est prévu pour se déplacer parallèlement à la matière en feuille (1) à découper, sous la matière en feuille et revient avec le mouvement de retour des moyens de saisie (5, 6).
